# EUROPÄISCHE PATENTANMELDUNG

(11) **EP 1 249 459 A1**
(43) Veröffentlichungstag der Anmeldung: **16.10.2002**
(21) Anmeldenummer: 02006684.1
(22) Anmeldetag: 27.03.2002
(51) Int. Cl.: C08G 18/08, C08G 18/38, B01J 13/14, C14C 11/00

(54) **Mit duftstoffhaltigen Mikrokapseln ausgerüstetes Leder**

(30) Priorität: 09.04.2001 DE 10117671
(71) Anmelder: BAYER AG, 51368 Leverkusen (DE)
(72) Erfinder: Kleban, Martin, Dr., 51381 Leverkusen (DE); Weisser, Jürgen, Dr., 41569 Rommerskirchen (DE); Koch, Friedrich, Dr., 51061 Köln (DE); Schwaiger, Wolfgang, 42799 Leichlingen (DE)

(57) **Zusammenfassung**

Leder, das in seinem Querschnitt duftstoffhaltige Mikrokapseln enthält, wobei die Mikrokapseln dadurch gekennzeichnet sind, dass ihre Wände aus Umsetzungsprodukten von Guanidinverbindungen und Polyisocyanaten bestehen oder solche Umsetzungsprodukte enthalten.

## Beschreibung

Die Erfindung betrifft mit duftstoffhaltigen Mikrokapseln ausgerüstetes Leder, Verfahren zu seiner Herstellung sowie spezielle kationisierte Mikrokapseln, ein Verfahren zu ihrer Herstellung und ihre Verwendung.

Bei modernen Herstellungsverfahren für Leder aus Häuten und Fellen werden heutzutage eine Vielzahl unterschiedlicher natürlicher und synthetischer Gerb-, Hilfs- und Zurichtstoffe eingesetzt. Der Eigengeruch vieler dieser Produkte sowie enthaltener Verunreinigungen, besonders organischer Lösungsmittel, führen dazu, dass das fertige Leder einen Geruch aufweist, der vom Verbraucher nur noch selten einem angenehmen, ledertypischen Aroma gleichgesetzt wird.

Der Versuch, dieses Problem mit einfachen, handelsüblichen Duftstofflösungen zu beheben, scheitert an zwei Problemen:
- Auftrag solcher Präparationen mit ledertypischen Anwendungsverfahren und Geräten ist mit einer starken Geruchsbelästigung der Arbeitskräfte verbunden.
- Die Wirkung einer solchen Präparation ist schon nach kurzer Zeit verflogen, während es sich bei Leder um ein sehr langlebiges Produkt handelt.

Die Verwendung von Mikrokapsel-Präparationen zur Ausrüstung von Leder ist bekannt, und für einige Beispiele beschrieben.

Die DE-A-3921145 z.B. beschreibt ein Verfahren zur Mattierung von Lederoberflächen durch Aufbringung von Mikrokapsel-haltigen Zurichtbindern. Von Bedeutung für die Wirksamkeit ist hier allein die Teilchengröße, nicht aber die Beschaffenheit der Teilchen oder gar deren Inhalt. Außerdem werden die Mikrokapseln mit dem Binder rein oberflächlich aufgetragen.

In der WO-A-00/65100 wird ein Prozess zur Ausrüstung von Leder mit Mikrokapseln, offenbart, wobei das Leder mittels einer Walze zusammengepresst wird und während der Entspannung entsprechende Mikrokapseln aufnimmt, ohne die chemische Beschaffenheit der Kapseln weiter zu spezifizieren.

Es wurde nun ein Leder gefunden, das in seinem Querschnitt duftstoffhaltige Mikrokapseln enthält, wobei die Mikrokapseln dadurch gekennzeichnet sind, dass ihre Wände aus Umsetzungsprodukten von Guanidinverbindungen und Polyisocyanaten bestehen oder solche Umsetzungsprodukte enthalten.

Bevorzugt enthält das erfindungsgemäße Leder duftstoffhaltige Mikrokapseln in 50 %, vorzugsweise in 80 % des Lederquerschnittes.

Bevorzugt beträgt die mittlere Teilchengröße der Mikrokapseln 2 - 20 µm.

Der Gehalt an duftstoffhaltiger Mikrokapsel im Leder beträgt vorzugsweise 0,1 - 10 Gew.-%, insbesondere 0,5 - 3 Gew.-%, bezogen auf das Gewicht des ausgerüsteten Leders.

Als Duftstoffe können alle handelsüblichen hydrophoben und damit wasserunlöslichen Riechstoffe eingesetzt werden, wie sie z.B. beschrieben werden von P. Kraft et al. in *Angew*. *Chem*., **2000**, *112*, 3106 - 3138. Bei Substanzen, die sowohl in Wasser wie auch in Ölen löslich sind, kann der Zusatz von geruchsneutralen, schwerflüchtigen Ölen wie Paraffinen, Alkylaromaten oder Estern eine Verwendung ermöglichen.

Durch Variation der Wandstärke können auf einfachste Art die Retentionseigenschaften der Kapseln beeinflusst werden. Auf diese Weise können "slow release"-Kapseln erzeugt werden, die aufgebracht auf Leder über lange Zeit kontinuierlich Duftstoff abgeben, aber auch praktisch geruchlose Leder, die nur bei mechanischer Belastung den Duftstoff verbreiten.

Bevorzugte Wandstärken der duftstoffhaltigen Mikrokapseln liegen im Bereich von 2 - 25 %, bevorzugt 3 - 15 %, insbesondere 4 - 10 % Wandanteil, jeweils bezogen auf die Summe der Kapselinhaltsstoffe.

Der Wandanteil der Mikrokapsel ist direkt proportional zum Anteil des primären Wandbildners, des Polyisocyanates.

Für die Herstellung der Mikrokapseln kommen als Guanidinverbindungen beispielsweise solche der Formel (I) in Frage 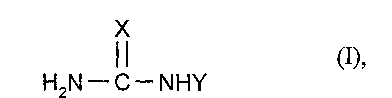 in der
x
für HN=, 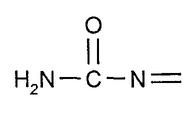 oder 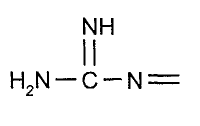 und
Y
für

H―, NC―, H₂N―, HO-

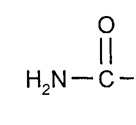

oder 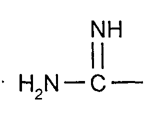 stehen,
oder deren Salze mit Säuren.

Beispielsweise kann es sich bei den Salzen um Salze von Kohlensäure, Salpetersäure, Schwefelsäure, Salzsäure, Kieselsäure, Phosphorsäure, Ameisensäure und/oder Essigsäure handeln. Der Einsatz von Salzen von Guanidinverbindungen der Formel (I) kann in Kombination mit anorganischen Basen erfolgen, um in situ aus den Salzen die freien Guanidinverbindungen der Formel (I) zu erhalten. Als anorganische Basen für diesen Zweck kommen z.B. Alkali- und/oder Erdalkalihydroxide und/oder Erdalkalioxide in Frage. Bevorzugt sind wässrige Lösungen oder Aufschlämmungen dieser Basen, insbesondere wässrige Natronlauge, wässrige Kalilauge und wässrige Lösungen oder Aufschlämmungen von Kalziumhydroxid. Es können auch Kombinationen mehrerer Basen angewendet werden.

Häufig ist es vorteilhaft, die Guanidinverbindungen der Formel (I) als Salze einzusetzen, weil sie in dieser Form im Handel erhältlich und die freien Guanidinverbindungen zum Teil in Wasser schwer löslich oder nicht lagerstabil sind. Wenn man anorganische Basen einsetzt, können diese in stöchiometrischen, unterstöchiometrischen und überstöchiometrischen Mengen, bezogen auf Salze von Guanidinverbindungen, verwendet werden. Vorzugsweise setzt man 10 bis 100 Äquivalent-% anorganische Base (bezogen auf Salze der Guanidinverbindungen) ein. Die Zugabe anorganischer Basen hat zur Folge, dass bei der Mikroverkapselung in der wässrigen Phase Guanidinverbindungen mit freien NH₂-Gruppen zur Reaktion mit den in der Ölphase enthaltenden Polyisocyanaten zur Verfügung stehen. Bei der Mikroverkapselung erfolgt die Zugabe von Salzen von Guanidinverbindungen und Basen zweckmäßigerweise so, dass man sie getrennt der wässrigen Phase zufügt.

Vorzugsweise wird Guanidin oder werden Salze von Guanidin mit Kohlensäure, Salpetersäure, Schwefelsäure, Salzsäure, Kieselsäure, Phosphorsäure, Ameisensäure und/oder Essigsäure eingesetzt.

Besonders vorteilhaft ist es, Salze von Guanidinverbindungen mit schwachen Säuren einzusetzen. Diese befinden sich in wässriger Lösung in Folge Hydrolyse im Gleichgewicht mit der entsprechenden freien Guanidinverbindung. Die freie Guanidinverbindung wird während des Verkapselungsprozesses verbraucht und bildet sich gemäß dem Massenwirkungsgesetz laufend nach. Diesen Vorteil zeigt in besonderer Weise das Guanidincarbonat. Beim Einsatz von Salzen von Guanidinverbindungen mit schwachen Säuren ist ein Zusatz anorganischer Basen zur Freisetzung der freien Guanidinverbindungen nicht erforderlich.

Die für die vorliegende Erfindung in Frage kommenden Guanidinverbindungen der Formel (I) können auch durch Ionenaustausch aus ihren wasserlöslichen Salzen nach dem Stand der Technik mit Hilfe handelsüblicher basischer Ionenaustauscher hergestellt werden. Man kann das Eluat aus dem Ionenaustauscher direkt zur Kapselwandbildung heranziehen, indem man es mit der Öl-in-Wasser-Emulsion vermischt.

Beispielsweise kann man soviel Guanidinverbindungen einsetzen, dass pro Mol NCO-Gruppen, die als Polyisocyanat in der Ölphase vorliegen 0,2 bis 4,0 Mol an freien NH₂-Gruppen in Form von Guanidinverbindungen in die Wasserphase eingebracht oder dort freigesetzt werden. Vorzugsweise beträgt diese Menge 0,5 bis 1,5 Mol. Beim Einsatz von Guanidinverbindungen in unterstöchiometrischer Menge verbleiben nach der Reaktion mit dem Polyisocyanat noch freie NCO-Gruppen. Diese reagieren dann im allgemeinen mit Wasser, was üblicherweise nicht kritisch ist, weil dabei neue, freie, zur Vernetzung fähige Aminogruppen entstehen.

Vorzugsweise werden die Guanidinverbindungen in Form wässriger Lösungen eingesetzt. Die Konzentration solcher Lösungen ist unkritisch und im allgemeinen nur durch die Löslichkeit der Guanidinverbindungen in Wasser begrenzt. Geeignet sind z.B. 1 bis 20 gew.-%ige wässrige Lösungen von Guanidinverbindungen.

Als Polyisocyanate können zur Herstellung der duftstoffhaltigen Mikrokapseln die verschiedensten aliphatischen, aromatischen und aromatisch-aliphatischen 2- und höherfunktionellen Isocyanate eingesetzt werden, insbesondere solche, die zur Herstellung von Mikrokapseln bekannt sind. Vorzugsweise werden aliphatische Polyisocyanate eingesetzt. Besonders bevorzugt eingesetzt werden: Hexamethylendiisocyanat, Isophorondiisocyanat und/oder freie Isocyanatgruppen aufweisende Derivate des Hexamethylendiisocyanats und des Isophorondiisocyanats, die Biuret-, Isocyanurat-, Uretdionund/oder Oxadiazintriongruppen enthalten. Es können auch Gemische verschiedener Polyisocyanate eingesetzt werden. Einige einsetzbare Polyisocyanate sind z.B. beschrieben in EP-A 227 562, EP-A 164 666 und EP-A 16 378.

In einer bevorzugten Ausführungsform des erfindungsgemäßen Leders werden Mikrokapseln eingesetzt, deren Wände aus Umsetzungsprodukten von Guanidinverbindungen, Polyaminen und Polyisocyanaten bestehen oder solche Umsetzungsprodukte enthalten.

Bevorzugt wird dabei die Guanidinverbindung in einer Menge von 0,5 - 0,99, insbesondere 0,51 - 0,75 Mol-Äquivalente, bezogen auf Polyisocyanat und die Polyaminverbindung in einer Menge von 0,1 - 1, insbesondere 0,5 - 0,75 Mol-Äquivalente, bezogen auf Polyisocyanat, eingesetzt, wobei die Gesamtmenge an Guanidinverbindung und Polyamin größer 1,1 Mol-Äquivalente, bezogen auf Polyisocyanat, ist.

Derartige Kapseln lassen sich beispielsweise durch Säureeinwirkung oder Alkylierung kationisieren, wodurch ebenfalls bevorzugt verwendete Mikrokapseln entstehen.

Die Erfindung betrifft daher auch beispielsweise durch Säureeinwirkung oder Alkylierung kationisierte Mikrokapseln, sowie ihre kationisierbaren Vorläufer, deren Wände aus Umsetzungsprodukte von Guanidinverbindungen, Polyaminen und Polyisocyanaten bestehen oder solche Umsetzungsprodukte enthalten.

Als polyfunktionelle Amine kommen in erster Linie lineare und/oder verzweigte Polyalkylenamine mit MW <5000 in Frage, bevorzugt aber gut wasserlösliche Polyethylenamine wie Diethylentriamin, Triethylentetramin, Tetraethylenpentamin, Pentaethylenhexamin oder Triaminoethylenamin sowie deren Gemische. Eine permanente Kationisierung kann sowohl vor wie auch nach der Kapselbildung durch übliche Alkylierungsreagenzien wie z.B. Dimethylsulfat erfolgen.

Ebenfalls bevorzugt ist das erfindungsgemäße Leder, wenn es vorzugsweise durch Alkylierung kationisierte Mikrokapseln enthält, deren Wände auf Umsetzungsprodukten von Guanidinverbindungen und Polyisocyanaten bestehen oder solche Umsetzungsprodukte enthalten.

Die Erfindung betrifft daher auch entsprechende kationisierte Mikrokapseln sowie die entsprechenden kationisierbaren Mikrokapseln.

Die erfindungsgemäßen kationisierten bzw. kationisierbaren Mikrokapseln sind in der Lage, insbesondere in einem Applikationsverfahren aus wässriger Flotte effektiv und substantiv auf Leder aufzuziehen. Auf diese Weise können auch im Flottenverfahren schon mit geringen Einsatzmengen gute Effekte erzielt werden.

Die erfindungsgemäßen Mikrokapseln können selbstverständlich auch andere eingekapselte Verbindungen enthalten, wie beispielsweise Farbstoffvorläufer, Klebstoffe, Pharmazeutika, Insektizide, Fungizide, Herbizide sowie Repellants. Sie lassen sich nicht nur auf Leder, sondern auch auf Papier und Textil und andere Substrate applizieren.

Die Erfindung betrifft weiterhin wässrige Dispersionen der erfindungsgemäßen Mikrokapseln. Bevorzugt enthalten die erfindungsgemäßen Dispersionen 5 - 60, insbesondere 25 - 52 Vol.-% an Mikrokapseln, bezogen auf die wässrige Dispersion.

Die Erfindung betrifft weiterhin ein Verfahren zur Herstellung des erfindungsgemäß ausgerüsteten Leders, das dadurch gekennzeichnet ist, dass man die Mikrokapseln, vorzugsweise einer wässrigen Dispersionen von Mikrokapseln vorzugsweise durch Sprühen, Film- oder Roller-Coaten auf die Fleischseite des Leders oder im Aüsziehverfahren auf das Leder appliziert.

Bevorzugt erfolgt das erfindungsgemäße Leder-Ausrüstungsverfahren unter Verwendung von 0,1 - 10 Gew.-%, insbesondere 0,5 - 3 Gew.-% an Mikrokapseln.

In einer bevorzugten Ausführungsform des Verfahrens erfolgt die Applizierung mittels Ausziehverfahren in der Flotte, wobei insbesondere die erfindungsgemäßen kationisierten oder kationisierbaren Mikrokapseln zum Einsatz kommen. Dabei wird die Flotte zu vorzugsweise mehr als 75 %, insbesondere zu mehr als 90 % ausgezehrt.

Die Zugabe der erfindungsgemäßen Mikrokapseln zur Gerbflotte erfolgt bevorzugt während der Nachgerbung oder während der abschließenden Fettung.

Die Herstellung von Leder und Pelzen aus Häuten und Fellen verläuft gewöhnlich in mehreren Schritten. Nach den vorbereitenden Arbeiten der Wasserwerkstatt, wie Enthaaren, Entfleischen, Entkälken und Beizen besteht eine typische Abfolge aus Gerbung, Nachgerbung, Färbung, Fettung und Zurichtung. Die einzelnen Arbeitsschritte lassen sich dabei noch in weitere Untereinheiten aufteilen.

Während die Gerbung zu einer Erhöhung der Schrumpftemperatur des Leders führt, hat die Nachgerbung darauf kaum Einfluss. Unter "Nachgerbung" versteht man die Nachbehandlung von vorgegerbtem (im allgemeinen chromgegerbtem) Leder, um Farbe, Egalität, Weichheit, Fülle sowie das Verhalten gegen Wasser (Hydrophobie) zu optimieren und Gerbstoffe zu fixieren.

Die Mikrokapseln werden, vorzugsweise als wässrige Dispersion, in einem pH-Bereich von 3 - 6, insbesondere von 4,5 - 5,9 zugegeben. Vorzugsweise lässt man die Mikrokapseln ins Leder penetrieren bevor man sie - ebenfalls als bevorzugte Variante des Verfahrens - im Leder fixiert durch Einstellung eines pH-Werts von 3 - 4,5, bevorzugt 3,4 - 4. Die Fixierung ist besonders bei den durch Säureeinwirkung, d.h. den latent kationisierten erfindungsgemäßen Mikrokapseln vorteilhaft.

Als organische mit Wasser nicht mischbare und inerte Lösungsmittel, die bei der Herstellung der erfindungsgemäßen und erfindungsgemäß angewendeten Mikrokapseln zusammen mit dem zu verkapselten Stoff und dem Polyisocyanat Bestandteil der Ölphase sind, kommen z.B. aromatische, aliphatische und naphthenische Kohlenwasserstoffe, Carbonsäureester, chlorierte Paraffine, Öle tierischer und pflanzlicher Herkunft, natürliche Fette mit Schmelzpunkten im Bereich 10 bis 35°C und über 100°C siedende aromatische und aliphatische Ether in Frage. Es können auch Gemische mehrerer Lösungsmittel eingesetzt werden.

Bei der Herstellung der duftstoffhaltigen Mikrokapseln kann die wässrige Phase gegebenenfalls Emulgatoren, Stabilisatoren und/oder die Koaleszenz verhindernde Stoffe enthalten. Emulgatoren kann gegebenenfalls auch die Ölphase enthalten. Die Menge derartiger Zusätze kann z.B. im Bereich 0 bis 2 Gew.-%, bezogen auf die jeweilige Phase liegen.

Die zu verkapselnden Duftstoffe dürfen unter den Verkapselungsbedingungen natürlich nicht mit Isocyanaten reagieren.

Die duftstoffhaltigen Mikrokapseln können nach an sich bekannten kontinuierlichen und diskontinuierlichen Verfahren hergestellt werden, wobei dann als Vernetzer nicht die üblichen Polyamine sondern Guanidinverbindungen einzusetzen sind. Insbesondere werden Guanidinverbindungen der Formel (I) oder deren Salze gegebenenfalls in Kombination mit anorganischen Basen eingesetzt. Ebenso führt der Einsatz basisch reagierender Salze von Guanidinverbindungen mit schwachen Säuren zu guten Resultaten. Diese Arbeitsweise ist technisch besonders vorteilhaft, da die freie Base nicht gesondert hergestellt werden muss, z.B. durch Zusatz von anorganischen Basen oder durch Ionenaustausch.

Auch die erfindungsgemäßen kationisierten Mikrokapseln können wie oben beschrieben hergestellt werden. Die Kationisierung erfolgt im Anschluss vorzugsweise durch Säureeinwirkung oder Alkylierung.

Bei der Herstellung der erfindungsgemäßen Mikrokapseln auf Basis von Guanidinverbindungen, gegebenenfalls Polyaminen und Polyisocyanaten wird das Polyamin vorzugsweise erst nach der Vernetzung des Polyisocyanats mit der Guanidinverbindung eingesetzt.

Man kann sowohl die Herstellung der Emulsion enthaltend Tröpfchen einer Ölphase und eine kontinuierliche wässrige Phase, als auch die Zugabe von Guanidinverbindungen kontinuierlich und diskontinuierlich durchführen.

Diskontinuierlich kann man z.B. so verfahren, dass man zu einer Emulsion, die Öltröpfchen etwa in der Größe der gewünschten Mikrokapseln enthält, bei 10 bis 50°C soviel einer Guanidinverbindung zufügt, wie stöchiometrisch für die Reaktion aller in der Ölphase vorhandenen Isocyanatgruppen benötigt wird. Stehen Guanidinverbindungen als Salze zur Verfügung, so kann man gegebenenfalls zunächst aus einer wässrigen Lösung des jeweiligen Salzes mit Hilfe eines Anionenaustauschers eine wässrige Lösung der freien Guanidinverbindung gewinnen und diese einsetzen. Es wird davon ausgegangen, dass alle in Guanidinverbindungen vorhandenen oder aus Salzen von Guanidinverbindungen gebildeten NH₂-Gruppen mit NCO-Gruppen reagieren können. Bei Guanidin und Guanidinsalzen (Formel (I), X = NH, Y = H) wird also davon ausgegangen, dass ein Mol davon mit 2 Molen NCO-Gruppen reagieren kann.

Das Zusammentreffen von freien Guanidinverbindungen und in der Ölphase befindlichen Polyisocyanaten bewirkt an Grenzflächen der Öltröpfchen zur wässrigen Phase den Start einer Polyadditionsreaktion, die auch als Vernetzung bezeichnet wird. Diese kann man gewünschtenfalls bei erhöhter Temperatur, z.B. bis zum Siedepunkt der wässrigen Phase, vervollständigen. Es resultiert eine Dispersion von Mikrokapseln in Wasser, deren Kapselgehalt bis zu ca. 60 Gew.-% betragen kann. Unter Kapselgehalt wird dabei das Gewichtsverhältnis von Ölphase inclusive des Isocyanats zu wässriger Phase in der Ausgangsemulsion verstanden. Bei der Berechnung des Kapselgehaltes wird die an der Wandbildung beteiligte Guanidinverbindung sowie gegebenenfalls eingesetzte anorganische Base nicht berücksichtigt.

Man kann der oben erwähnten Emulsion auch Salze von Guanidinverbindungen zusetzen. Man hält die Temperatur dann unter 60°C und kann dann eine anorganische Base der beschriebenen Art zugeben, vorzugsweise in stöchiometrischer Menge, bezogen auf das Salz. Dabei werden in situ Guanidinverbindungen freigesetzt, die dann in der o.a. Weise reagieren. Bei Salzen aus Guanidinverbindungen und schwachen Säuren, die in Gegenwart von Wasser hydrolytisch gespalten werden und dann Anteile freier Guanidinverbindungen enthalten, kann die Zugabe anorganischer Basen entfallen. Dies trifft insbesondere auf Guanidincarbonat zu.

Kontinuierlich kann man z.B. so verfahren, dass man in einer Emulgiermaschine im Durchlaufverfahren kontinuierlich eine Emulsion der gewünschten Art und Öltröpfchengröße erzeugt. Danach kann man ohne die Einwirkung von Scherkräften z.B. bei 25 bis 50°C kontinuierlich eine wässrige Lösung einer Guanidinverbindung und gegebenenfalls in einem nachgeschalteten Reaktiongefäß, falls erforderlich, die zur Freisetzung von Guanidinverbindungen aus Salzen erforderliche anorganische Base zusetzen. In weiteren Reaktionsgefäßen kann dann, gegebenenfalls bei Temperaturen bis zu 100°C, die Polyadditionsreaktion zu Ende geführt werden.

Die vorliegende Erfindung betrifft auch ein Verfahren zur Herstellung der erfindungsgemäßen Mikrokapseldispersionen, bei der man eine Ölphase, die ein organisches, mit Wasser nicht mischbares, inertes Lösungsmittel, den zu verkapselnden Duftstoff und ein Polyisocyanat enthält, in einer Wasserphase, die gegebenenfalls Zusatzstoffe enthält, emulgiert und der Emulsion einen Stoff zufügt, der mit Isocyanatgruppen Additionsreaktionen eingehen kann, das dadurch gekennzeichnet ist, dass man der Emulsion eine Guanidinverbindung zufügt.

### Beispiele

### Beispiel 1: Kapseln mit Duftstofffüllung

Unter Kühlung werden 0.7 l einer 0.8 %igen Lösung von Polyvinylalkohol 26/88 (Airvol® 523, Air Products) in Wasser vorgelegt und während 40 s 0.3 l einer Lösung aus 21 g Polyisocyanat (HDI-Biuret, NCO-Gehalt ca 22%) in 300 ml Duftstoff unter Rühren zugegeben. Es wird weitere 4 min mit einem hochtourigen Rotor-Stator Mischer emulgiert (Temperatur 20 - 25°C), um die gewünschte mittlere Teilchengröße zu erreichen. Danach werden 53 g 10 %ige Guanidiniumcarbonatlösung zugegeben und die Dispersion unter Rühren langsam auf 70°C aufgeheizt (2 h). Nach weiteren 2 h bei 70°C wird auf RT gekühlt und die Dispersion durch Zugabe von 40 ml Verdicker (modifizierte Stärke) stabilisiert.

### Beispiel 2: Kapseln mit Duftstoff und neutralem Öl

Unter Kühlung werden 0.5 l einer 1.2 %igen Lösung von Polyvinylalkohol 26/88 (Airvol® 523, Air Products) in Wasser vorgelegt und während 40 s 0.5 l einer Lösung aus 35 g Polyisocyanat (HDI-Biuret, NCO-Gehalt 23%) in 50 ml Duftstoff und 450 ml Diisopropylnaphthalin unter Rühren zugegeben. Es wird weitere 4 min mit einem hochtourigen Rotor-Stator Mischer emulgiert (Temperatur 20 - 25°C), um die gewünschte mittlere Teilchengröße zu erreichen. Danach werden 88 g 10 %ige Guanidiniumcarbonatlösung zugegeben und die Dispersion unter Rühren langsam auf 70°C aufgeheizt (2 h). Nach weiteren 2 h bei 70°C wird auf RT gekühlt und die Dispersion durch Zugabe von 40 ml Verdicker (modifizierte Stärke) stabilisiert.

### Aussehen und Lagerstabilität der Kapseldispersionen aus Beispielen 1 und 2:

| N° | Duftstoff | Isocyanat | Teilchengröße [µm]; Verteilung | Slurry |
|---|---|---|---|---|
| 1a | Blue Line | HDI-Biuret | 7.2; 2.1 | weiß, |
| 1b | Cuir Naturell | HDI-Biuret | 6.9; 2.0 | weiß, |
| 1c | Blue Line | HDI-Trimer | 7.0; 2.2 | weiß, |
| 1d | Blue Line | HDI-Biuret + PMDI 1:1 | 11.5; 1.6 | weiß, |
| 2a | Blue Line | HDI-Biuret | 6.0; 1.3 | weiß, |
| 2b | Lennox | HDI-Biuret | 5.7; 1.3 | weiß, |
| 2c | Cuir Naturell | HDI-Biuret | 5.8; 1.4 | weiß, |
| 2d | Frutti di Bosco | HDI-Biuret | 3.1; 1.8 | weiß, |
| 2e | Ozonodor | HDI-Biuret | 4.0; 1.4 | weiß, |

### Duftstoffe: Produkte der Firma Haarmann & Reimer, Holzminden:

Blue Line: Mischung aus Methylisopropylcylohexen, (Diisopropylphenyl)methylpropanal, Citronenoel und Dimethyloctadienol in Benzoldicarbonsäurediethylester;
Cuir Naturell: Mischung aus Dimethylphenol, Benzylalkohol, Phenylethylalkohol, Kresol, Benzylbenzoat und Terpineol in Benzoldicarbonsäurediethylester;
Frutti di Bosco: Mischung aus Benzylbenzoat, Benzylalkohol, Benzaldehyd, Allylcapronat, Methylsalicylat Orangenöl, Nelkenblütenöl;
Ozonodor: Mischung aus Terpentinöl, Fichtennadelöl und Eucalyptusöl in Trimethylbicycloheptanylacetat;
HDI-Biuret: NCO-Gehalt ca. 23 %, Viskosität ca. 2500 mPas
HDI-Trimer: NCO-Gehalt ca. 22 %, Viskosität ca. 3500 mPas
PMDI: NCO-Gehalt ca. 32 %, Viskosität ca. 3000 mPas
HDI = Hexamethylendiisocyanat
PMDI = Polymethylendiphenyldiisocyanat

### Teilchengröße:

⌀: Mittlerer Durchmesser in µm (Volumenauswertung); Verteilung: Breite Verteilung (d₉₀ - d₁₀)/d₅₀ (Volumenauswertung);

### Beispiel 3: Ausrüstung von Leder im Auftragsverfahren

Die erhaltene Kapselslurry Bsp. 1a wurde 1:10 mit Wasser verdünnt und auf ein handelsübliches Möbelleder (Rind, 1.5 mm, chromgegerbt, Anilin-Typ) auf der Fleischseite aufgetragen durch:
a) aufsprühen, mit 2 mal ca. 100 ml/m², Zwischen- und Nachtrocknen 1 min bei 80°C.
b) Filmcoater, Auftrag ca. 200 ml/m², Trocknen 1 min bei 80°C.

Nach Auftrocknen konnte keine signifikante Veränderung der Ledereigenschaften (Griff, Weichheit) festgestellt werden. Man erhält ein angenehm riechendes Leder, dessen Geruch bei mechanischer Beanspruchung/Bewegung zunimmt. Der Effekt ist auch nach mehreren Wochen noch wahrnehmbar.

Wird stattdessen die Kapselpräparation aus Bsp. 2a verwendet, ist das erhaltene Leder zwar nach dem Trocknen praktisch geruchlos, dafür tritt der gewünscht Effekt bei oder nach mechanischer Belastung auf.

### Beispiel 4: Ausrüstung von Leder im Auftragsverfahren mit einer Farbstoffkapsel

Um die Durchdringung des Leders zu demonstrieren, wurde eine Kapsel analog zu Bsp. 2 hergestellt, als Kapselfüllung wurde jedoch eine Lösung aus 4 % Kristallviolettlacton in Diisopropylnaphthalin verwendet. Kristallviolettlacton ist unter neutralen Bedingungen farblos, wird aber in Kontakt mit Feuchtigkeit und Säure (wie im Leder Vorhanden) intensiv blau-violett.

Der Auftrag erfolgte wie in Bsp. 3a durch Aufsprühen

Oberfläche und auch der Querschnitt durch das ausgerüstete Leder sind farblos, was bedeutet, dass kein freier Farbstoff vorliegt, und beweist, dass durch den Auftrag die Mikrokapseln nicht beschädigt werden.

Durch heftige Bewegung des Leders bzw. Reiben auf der Schnittfläche des Leders können die Kapseln zerstört werden. Durch den nun freigesetzten Farbstoff färbt sich der Querschnitt des Leders durchgehend blau, was die gleichmäßige Verteilung der Kapseln durch den gesamten Lederquerschnitt beweist.

### Beispiel 5: Latent kationische Kapsel

Unter Kühlung werden 0.5 l einer 0.8 %igen Lösung von Polyvinylalkohol 26/88 (Airvol® 523, Air Products) in Wasser vorgelegt und während 40 s 0.3 l einer Lösung aus 21 g Polyisocyanat (HDI-Biuret, NCO-Gehalt 23%) in 300 ml Duftstoff "Blue Line" unter Rühren zugegeben. Es wird weitere 4 min mit einem hochtourigen Rotor-Stator Mischer emulgiert (Temperatur 20 - 25°C), um die gewünschte mittlere Teilchengröße zu erreichen. Danach werden 40 g 10 % Guanidiniumcarbonatlösung zugegeben und die Dispersion unter Rühren langsam auf 70°C aufgeheizt (2 h). Anschließend werden 50 ml einer 10 %igen Lösung von Pentaethylenhexamin in Wasser zugesetzt. Nach weiteren 2 h bei 70°C wird auf RT gekühlt und die Dispersion durch Zugabe von 40 ml Verdicker (modifizierte Stärke) stabilisiert.

### Beispiel 6: Latent kationische Kapsel

Unter Kühlung werden 0.5 l einer 1.2 %igen Lösung von Polyvinylalkohol 26/88 (Airvol® 523, Air Products) in Wasser vorgelegt und während 40 s 0.5 l einer Lösung aus 35 g Polyisocyanat (HDI-Biuret, NCO-Gehalt 23%) in 50 ml Duftstoff "Blue Line" und 450 ml Diisopropylnaphthalin unter Rühren zugegeben. Es wird weitere 4 min mit einem hochtourigen Rotor-Stator Mischer emulgiert (Temperatur 20 - 25°C), um die gewünschte mittlere Teilchengröße zu erreichen. Danach werden 60 g 10 % Guanidiniumcarbonatlösung zugegeben und die Dispersion unter Rühren langsam auf 70°C aufgeheizt (2 h). Anschließend werden 70 ml einer 10 %igen Lösung von Pentaethylenhexamin in Wasser zugesetzt. Nach weiteren 2 h bei 70°C wird auf Raumtemperatur (RT) gekühlt und die Dispersion durch Zugabe von 40 ml Verdicker (modifizierte Stärke) stabilisiert.

### Beispiel 7: Permanent kationische Kapsel

Zu einer wie in Bsp. 5 hergestellten Kapseldispersion werden vor dem Verdicken 7 g Dimethylsulfat zugegeben, und die Mischung auf 50°C erhitzt. Nach 2 h Rühren bei 50°C wird auf RT abgekühlt und die Dispersion durch Zugabe von Verdicker stabilisiert.

### Beispiel 8: Ausrüstung von Leder im Fass, Flottenverfahren

Rohmaterial Wet Blue, Rind, 2 mm; Prozentangaben beziehen sich auf Falzgewicht des Wet Blue; Vorgehensweise:

Das Wet Blue wird bei pH von ca. 5 mit den Nachgerbstoffen und Fetten zusammen gegeben. Dazu können Mikrokapseln zugegeben werden (Zugabezeitpunkt A). Nachgerbstoffe gegebenenfalls Mikrokapseln und Fette penetrieren sodann ins Leder, bevor sie bei pH 3.5 bis 4 fixiert werden.

Die Mikrokapseln können auch während der sich daran anschließenden abschließenden Fettung zugegeben werden (Zugabezeitpunkt B).

Eine beispielhafte Zugabesequenz von Inhaltsstoffen verdeutlicht dies im folgenden.

| | **%** | **Produkt** | **Zeit Min.** | **Bemerkungen** |
|---|---|---|---|---|
| | 200 | Wasser 40°C | | |
| | 0,2 | Ameisensäure 1:10 | 15 | pH: 3,4 |
| | | | | Flotte ab |
| | 100 | Wasser 40°C | | |
| | 1,0 | Farbstoff 1:20 | 20 | |
| + | 2,0 | Neutralsalz, (aromatische Sulfonsäuren) | | |
| | 2,0 | Syntan (Kondensat aromatischer Sulfonsäuren) | | |
| | 1,5 | Natriumformiat | 30 | pH: 4,2 |
| + | 0,5 | Natriumbicarbonat | 30 | pH: 4,8 |
| | | | | Flotte ab |
| | 300 | Wasser 40°C | 10 | Flotte ab |
| | 50 | Wasser 40°C | | |
| | 3,0 | Weichmachender Polymergerbstoff | 20 | pH: 5,2 |
| | | | | |
| + | 6,0 | Syntan (Kondensat aromatischer Sulfonsäuren) | | |
| | 3,0 | Harzgerbstoff | 30 | |
| + | 2,0 | Färbereihilfsmittel (aromatische Sulfonsäuren) | | |
| | 3,0 | Farbstoff | | |
| | **3,0** | **Testprodukt, Zugabezeitpunkt A** | **60** | |
| + | 50 | Wasser 50°C | 5 | |
| + | 0,5 | Ameisensäure 1:10 | 15 | |
| + | 0,5 | Ameisensäure 1:10 | 30 | pH: 3,9 |
| | | | | Flotte ab |
| | 50 | Wasser 50°C | | |
| | 0,5 | Ammoniak 1:10 | 5 | |
| | | | | |
| + | **2,0** | **Testprodukt, Zugabezeitpunkt B** | | |
| | 8,0 | Synthetisches Fettungsmittel 1:4 | 60 | |
| | | | | |
| + | 1,0 | Ameisensäure 1:10 | 30 | pH: 3,8 |
| | | | | Flotte ab |
| | | | | |
| | 300 | Wasser 40°C | 10 | Flotte ab |

Leder auf Bock, ausrecken, Vakuumtrocknung 1 ½ min bei 60°C, hängend fertigtrocknen, betriebsüblich fertig stellen

| N° | Testprodukt | Zugabe-zeitpunkt | Flottenauszehrung | Bemerkung |
|---|---|---|---|---|
| 8a | Duftstoff "Blue Line" | B | Nicht bestimmbar | starke Geruchsbelästigung während der Gerbung, Geruch im Leder verfliegt innerhalb einiger Tage |
| 8b | Kapseln aus Beispiel 4 | A | 90 % | langanhaltend angenehm riechendes Leder, Geruch wird durch Bewegung verstärkt |
| 8c | Kapseln aus Beispiel 4 | B | 77% | langanhaltend angenehm riechendes Leder, Geruch wird durch Bewegung verstärkt |
| 8d | Kapseln aus Beispiel 5 | A | 91 % | fast geruchloses Leder, Nach Bewegung angenehm riechend |
| 8e | Kapseln aus Beispiel 6 | B | 94 % | fast geruchloses Leder, Nach Bewegung angenehm riechend |

## Patentansprüche

1. Leder, **dadurch gekennzeichnet, dass** es in seinem Querschnitt duftstoffhaltige Mikrokapseln enthält, wobei die Mikrokapseln **dadurch gekennzeichnet sind, dass** ihre Wände aus Umsetzungsprodukten von Guanidinverbindungen und Polyisocyanaten bestehen oder solche Umsetzungsprodukte enthalten.

2. Leder gemäß Anspruch 1, **dadurch gekennzeichnet, dass** der Gehalt an duftstoffhaltiger Mikrokapsel in Leder 0,1 - 10 Gew.-%, bezogen auf das Gewicht des ausgerüsteten Leders, beträgt.

3. Verfahren zum Herstellen von ausgerüstetem Leder gemäß Anspruch 1, **dadurch gekennzeichnet, dass** man Mikrokapseln auf die Fleischseite des Leders oder im Ausziehverfahren auf das Leder appliziert.

4. Verfahren gemäß Anspruch 3, **dadurch gekennzeichnet, dass** die Applizierung der Mikrokapseln mittels Ausziehverfahren in der Flotte erfolgt, wobei die zum Einsatz kommenden Mikrokapseln kationisiert oder durch Säureeinwirkung kationisierbar sind.

5. Durch Alkylierung oder Säureeinwirkung kationisierte Mikrokapseln, deren Wände aus Umsetzungsprodukten von Guanidinverbindungen, Polyaminen und Polyisocyanaten bestehen oder solche Umsetzungsprodukte enthalten.

6. Kationisierbare Mikrokapseln, deren Wände aus Umsetzungsprodukten von Guanidinverbindungen Polyaminen und Polyisocyanaten bestehen oder solche Umsetzungsprodukte enthalten.

7. Wässrige Dispersionen enthaltend kationisierte oder kationisierbare Mikrokapseln nach Anspruch 5 oder 6.

8. Verwendung von Mikrokapseln gemäß Anspruch 5 oder 6 zur Ausrüstung von Leder mit eingekapselten Inhaltsstoffen, insbesondere Duftstoffen.
